(19) **Europäisches Patentamt**

**European Patent Office**

**Office européen des brevets**

(11) **EP 1 691 359 A2**

(12) **EUROPEAN PATENT APPLICATION**

(43) Date of publication:
**16.08.2006 Bulletin 2006/33**

(51) Int Cl.:
***G11B 7/125*** (2006.01)

(21) Application number: **06250638.1**

(22) Date of filing: **07.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.02.2005 KR 2005011149**

(71) Applicant: **Samsung Electronics Co., Ltd.**
**Suwon-si, Gyeonggi-Do (KR)**

(72) Inventors:
• **Yoo, Jang-hoon,**
**932-1306 Sinsigaji 9danji Apt.**
**Seoul (KR)**
• **Park, Soo-han,**
**511-901 Jinsan-maeul**
**Yong-si**
**Gyeonggi-do (KR)**
• **Park, Chun-seong**
**Suwon-si**
**Gyeonggi-do (KR)**
• **Lee, Tae-hoon,**
**109-1805, Sadang LG Apt.**
**Seoul (KR)**

(74) Representative: **Robinson, Ian Michael et al**
**Appleyard Lees,**
**15 Clare Road**
**Halifax HX1 2HY (GB)**

(54) **Optical disk writing and reading apparatus, and method thereof**

(57)     An optical disk writing and reading apparatus and a method thereof is provided. The optical disk writing and reading apparatus has an optical pick-up (10, 50) for writing or reading data on an optical disk (70) by using a laser light of a certain wavelength, an optical power calculation part (150) for calculating an optical power of the laser light generated from the optical pick-up (10, 50), and a micom (100) operating the optical power calculation part (150) by every certain time to detect the optical power of the laser light and adjusting the optical power of the laser light based on a preset optimum optical power to be optimized while writing the data on the optical disk.

FIG. 2

## Description

The present invention relates to an optical disk writing and reading apparatus, and method thereof.

Optical disks such as CDs and DVDs are widely adopted, and recently, an advanced type of_optical disk, the Bluray disk (BD) has been introduced.

There are various types of DVD such as DVD RAM, DVD-R, DVD+R, DVD-RW, and DVD+RW depending on writing or reading of data, and its standard. Two disks with the same thickness are combined to form the DVD, one disk refers to a side, and layers are formed on each side to write data. One or more layers can be formed on each side, and dual layer DVDs are manufactured which have multiple layers for DVD-R, DVD+R, DVD-RW, and DVD+RW.

The BD writes and reads data by using a blueray laser and comprises one side. The BD can be formed with a plurality of layers like the DVD, and is a high capacity optical disk that can write and read data of 25 to 27GB in the case of a single layer, and data of 50GB in the case of dual layers. The BD writes and reads data by using the blue wavelength of 405nm so that a smaller and clearer focus of laser light can be formed in comparison with a conventional disk using a red wavelength of 650nm. Additionally, the numerical aperture (NA) of BD is 0.85 and the refractive index is great so that more data can be written on a smaller area in comparison with the same size of CD or DVD.

The optical disk writing and reading apparatus for writing and reading data on the optical disk determines an optimum laser optical power prior to writing data, to write data onto the optical disk. To determine the optimum laser optical power, a micom (micro computer) of the optical disk writing and reading apparatus extracts information on an initial optical power which is necessary when writing the data according to a disk code included in absolute time in pre-groove (ATIP) information encoded in a read-in area of the optical disk. Then, the micom determines if the optical power of the laser light emitted from a laser diode is included in a certain permitted range of the optical power previously extracted by the disk code, and if so, the micom maintains the optical power to write data onto the optical disk. However, if the optical power is not included in the certain permitted range, the micom performs an optimal power calibration (OPC) operation that detects an optimum writing optical power in a test area of the optical disk.

In the process of OPC operation, the optimum optical power is determined by using β value and γ value, and β value is calculated by the following equation I:

[Equation 1]

$$\beta = \frac{A_1 + A_2}{A_1 - A_2}$$

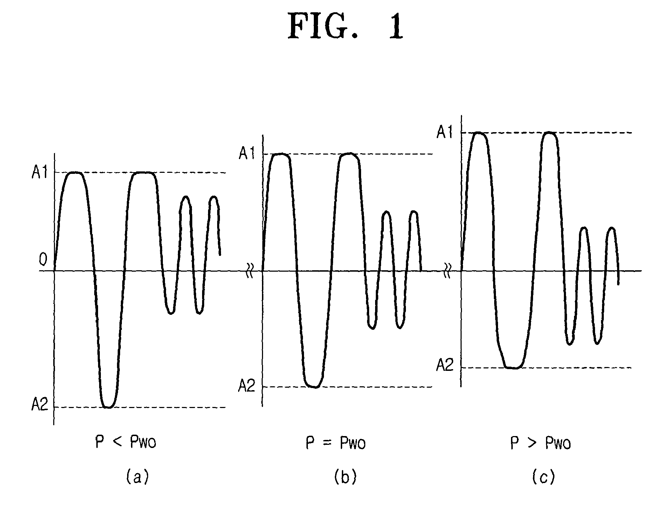

in which $A_1$ and $A_2$ are a maximum value and a minimum value, respectively, of a low frequency of RF signal shown in Figure 1 (a) through (c). The RF signal is downwardly shifted in Figure 1(a), and β value is a negative value according to the equation 1 so that the optical power of the laser light emitted from the laser diode is smaller than the optimum optical power. The RF signal shown in Figure 1(b) is symmetrically arranged based on 0 point, and β value is maximum according to the equation 1 so that the optical power may be the optimum optical power. The RF signal shown in Figure 1(c) is upwardly shifted, and the β value is smaller than that of Figure 1 (b) according to the equation 1 so that the optical power is greater than the optimum optical power. In other words, the symmetry of the signal is detected based on the β value, and the optical power becomes optimal as β value is greater so that the optical power is adjusted and the optical power with the greatest β value is set as the optimum optical power.

Once the optical power is set according to a conventional process, the same optical power is used to write data until the writing of the optical disk is completed. However, if an optical disk has material differences between the inner circumference and the outer circumference such as thickness, refractive index, polarized light birefringence of optical disk, the optical power may be in excess of the pre-set certain permitted range as data is written with a high speed. In particular, in a high density optical disk such as BD having a high numerical aperture (NA=0.85) and using a laser light of a short wavelength of 400nm, a dual-layer optical disk or multi-layer optical disk has errors in the thickness of layers among manufacturers. Therefore, the optical power may more often exceed the preset permitted range.

If the writing time of the optical disk is longer, the temperature of each element of optical pick-up increases by the laser light, and accordingly, the optical power is changed. As the temperature increases, the divergent angle and the polarized direction of the laser diode are changed, and the optical power is changed according to those changes. As many contaminants such as dust, scratches, and fingerprints are on the optical disk, the optical power is changed. Generally, as the temperature increases, the optical power decreases. As the position of the collimating lens of optical pick-up is changed by an aberration compensation performed while the data is written, the refractive index of the laser light is changed and the optical power is also changed. Accordingly, data can not be written on the optical disk by the laser light of the preset optical power or can not be read after writing.

Conventionally, the optical power is determined and the OPC process is performed only prior to writing data onto the optical disk.

Aspects of the present invention aim to address the above problems and/or provide the advantages described below.

According to the present invention there is provided an apparatus and method as set forth in the appended claims. Preferred features of the invention will be apparent from the dependent claims, and the description which follows.

To efficiently deal with changes in optical power depending on the temperature and status of optical disk and the position of collimating lens (CL) while the data is written on the optical disk, it is advantageous that the optical power is determined periodically while the data is written on the optical disk and if the measured optical power is not the optimum optical power, the optical power is changed to the optimum one. More particularly, the present invention relates to an optical disk writing and reading apparatus that continuously searches optical power while writing data and adjusts the optical power to an optimum value so that data can be accurately written on an optical disk.

Exemplary embodiments of the present invention provide an optical writing and reading apparatus which continuously measures an optical power during the process of writing data to suitably adjust the optical power to the optimum value so that data can be accurately written onto an optical disk, and a method thereof.

According to an aspect of the present invention, an optical writing and reading apparatus is provided comprising an optical pick-up for writing or reading data on an optical disk by using a laser light of a certain wavelength. An optical power calculation part calculates an optical power of the laser light generated from the optical pick-up. A micom operates the optical power calculation part periodically to detect the optical power of the laser light and adjusts the optical power of the laser light based on a preset optimum optical power to be optimized while writing the data on the optical disk.

The micom may read a disk code encoded in the optical disk to detect the optimum optical power for writing and adjust the optical power of the laser light based on the optimum optical power.

The apparatus may further comprise an RF part for converting an electrical signal into a binary signal to output a RF signal, the electrical signal converted from the laser light by having been reflected by the optical disk at the optical pick-up. The optical power calculation part preferably detects a change of a reading signal such as a β value indicating a symmetry of a waveform of the RF signal_based on 0 point and a γ value indicating a numerical value of a modulation degree according to a change of the optical power.

The micom may adjust the optical power of the laser light to search the optimum optical power where the β value and the γ value become maximal, and set the laser light to the optimum optical power.

The apparatus may further comprise at least one of a jitter calculation part for calculating a jitter by using the electrical signal, the electrical signal converted from the laser light by having been reflected by the optical disk, a PRML process part for performing a PR (partial response) process and a maximum likelihood (ML) process for the RF signal to output a SBER. The micom may compensate for an aberration periodically by using at least one of the jitter, the SBER, a track signal obtained by moving the optical pick-up in a direction of a radius of a track, a tracking signal and a focusing signal obtained by the R/F part, while writing the data on the optical disk.

The micom may compensate for the aberration prior to optimizing the optical power if there exists one of a request for writing the data and a request for reading the data on the optical disk.

The micom may compensate for the aberration while writing or reading the data on the optical disk.

The micom may compensate for the aberration by approaching the CL to the OL or distancing the CL from the OL.

A liquid crystal element, to which power is supplied, is preferably arranged in front of the CL, and the micom may compensate for the aberration by changing the power supplied to the liquid crystal element.

According to an aspect of the present invention, a method for writing and reading data on an optical disk comprises mounting an optical disk onto an optical pick-up and of a user selecting a writing of data. An optical power of a laser light generated from the optical pick-up is calculated, and if the calculated optical power is not included in a certain permitted range of a preset optimum optical power, the optical power is adjusted to determine an optimum optical power, and an output of the laser light is set to the determined optimum optical power.

The method may further comprise reading a disk code from a read-in area of the optical disk to detect the optimum optical power for writing the data.

The above aspects and features of the present invention will be more apparent by describing certain exemplary embodiments of the present invention with reference to the accompanying drawings, in which:

Figure 1 (a) through Figure 1 (c) are views of RF signals detected by an RF part of an optical disk writing and reading apparatus;

Figure 2 is a construction view of an optical disk writing and reading apparatus according to an embodiment of the present invention; and

Figure 3 is a flowchart of processes of an aberration compensation and an optimization of optical power of the optical disk writing and reading apparatus of Figure 2.

Throughout the drawings, like reference numbers will be understood to refer to like elements, features and structures.

Exemplary embodiments of the present invention will be described in detail with reference to the annexed drawings. In the following description, detailed descriptions of known functions and configurations incorporated herein have been omitted for conciseness and clarity.

Generally, in an optical disk writing and reading apparatus, a spot size focused on an optical disk and an optical power should be optimized in accordance with the features of optical disk in order to accurately write data.

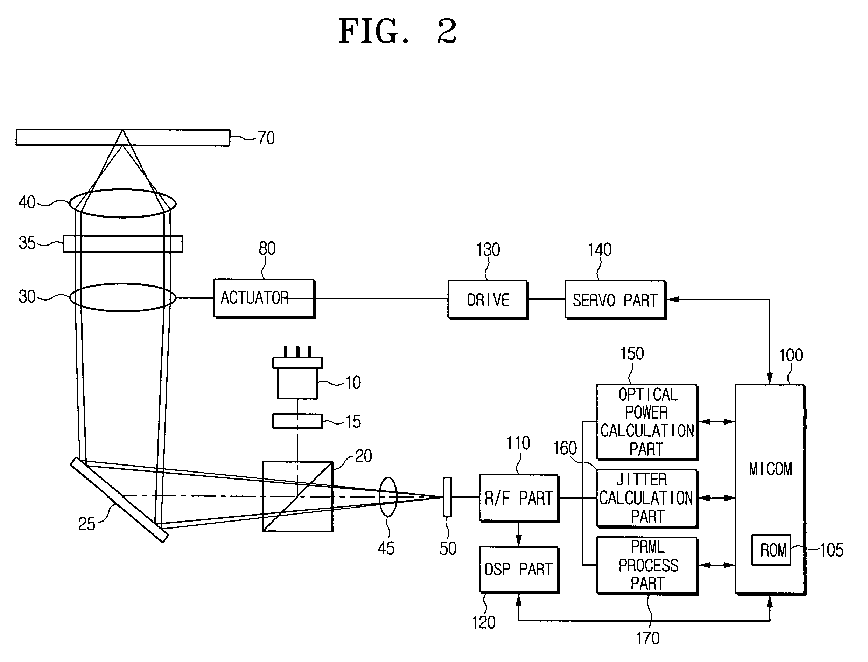

As shown in Figure 2, the optical disk writing and reading apparatus comprises an optical pick-up, R/F part 110, an optical power calculation part 150, a jitter calculation part 160, a PRML process part 170, a drive 130, a servo part 140, a DSP part 120, and a micom (micro computer) 100.

The optical pick-up reads and writes data on the optical disk according to driving signals, and comprises a laser diode 10 for generating a laser, a HWP (Half Wave Plate) 15, a beam splitter 20, a light conversion mirror 25, a CL (Collimating lens) 30, an OL (Object Lens) 40, a holographic optical component (HOE) 35, a Yo lens 45, and a photodetector integrated circuit (PDIC) 50 that is an optical detector.

The laser diode 10 generates laser light of proper wavelengths for writing and reading information on an optical disk 70, and the laser light is p-polarized. The HWP 15 converts the p-polarized laser light into a half wavelength, that is, 180°, to s-polarize.

The beam splitter 20 reflects the laser light according to the polarization direction of the laser light by using a polarization element to change the path of light or penetrate the light.

The CL 30 converges the diverged laser light so that the laser light can be in parallel towards the HOE 35, and moves in an optical axial direction by the actuator 131 to adjust the distance from the OL 40. If the distance between the CL 30 and the OL 40 is adjusted, the focal distance of the laser light is changed so that focuses can be accurately formed on both a first layer and a second layer of dual layers.

The HOE 35 is divided into a hologram part and a quarter wave plate (QWP). As a regular polarized wave, such as, S-wave is incident, the HOE 35 passes all the S-wave without diffractions, and passing the QWP, the S-wave converts into a circular polarized wave. Accordingly, the S-wave laser light emitted from the CL 30 is circular polarized by the QWP to be provided to the OL 40. The laser light reflected from the optical disk 70 passes the QWP to P-polarize again, and passes the hologram part to be diffracted to a plurality of lights. The diffracted lights are incident on the PDIC 50 so as to perform each focusing and tracking.

The OL 40 converges the laser light passing the HOE 35 to focus on one of layers of the optical disk 70, and the laser light is reflected by the optical disk 70.

The laser light reflected by the optical disk 70 moves along a light path in an opposite direction of being incident, sequentially passing the OL 40, the HOE 35, and the CL 30. The circular polarized laser light having passed the OL 40 passes the HOE 35 to P-polarize, and the P-polarized laser light is split into a plurality of spots. Then, the split laser lights are perpendicularly reflected to the beam splitter 20 at the light conversion mirror 25, and P-polarized laser light passes the beam splitter 20 contrary to the S-polarized laser light.

The Yo lens 45 converges the laser light having passed the beam splitter 20 into the PDIC 50, and the PDIC 50 receives the laser light having split into the plurality of spots to convert optical signals to electrical signals.

The R/F part 110 converts the electrical signal converted by the PDIC 50 into binary signals to output the RF signals.

The optical power calculation part 150 calculates β value or γ value to detect the optical power from the RF signals output by the R/F part 110 while writing. The β value can be calculated by using the above-mentioned equation 1, and as the β value become greater, the optical power of the laser light generated by the laser diode may be the optimum optical power.

The γ value is a numerical value of a modulation degree according to the changes of optical power, and a differential value of the optical power. The modulation degree is a rate of a level of high frequency signal with respect to a level of low frequency signal in the RF signals. As the level of high frequency signal become higher, the modulation degree become also higher, and as the modulation degree become higher, the aberration of the optical pick-up become smaller. Accordingly, as the γ value become higher, the optical power may be the optimum optical power.

The jitter calculation part 160 calculates jitter values by using the electrical signals output from the PDIC 50. While writing and reading data, moving along grooves of the optical disk 70, the laser light is reflected. At this time, if the groove of the optical disk 70 is elaborately formed, the electrical signals input to the PDIC 50 disappear in accordance with regular patterns. However, if the length and shape of the groove of the optical disk 70 is irregular, the electrical signals are irregular and jitter, that is a kind of noise, is generated. The jitter can be calculated by comparing a measured jitter value with a normal jitter value. The measured jitter value is obtained by averaging the electrical signals of the same pits during a certain section among the electrical signals input from the PDIC 50, and the normal jitter value is obtained by measuring electrical signals of a normal status in which pits are elaborately formed. In other words, if the measured jitter value calculated by the jitter calculation part 160 is not included in a certain error range of the normal jitter value, the groove of the optical disk 70 is irregular.

If the thickness of the optical disk is different from a thickness of a standard disk by more than a certain value, and if the entire thickness of the optical disk 70 is irregular, the jitter value entirely increases, and therefore, a spherical aberration can be detected by the jitter value. If the thickness of the optical disk 70 is in excess of the certain error range, the focus of the laser light is not accurately formed on the layer of the optical disk 70 so that the spherical aberration occurs. If the spherical aberration occurs, the electrical signals of the laser light reflected from the optical disk 70 weaken so that the jitter increases. In other words, if the thickness of the optical disk 70 is in excess of the certain error range to generate the spherical aberration, the jitter also increases. Accordingly, the increase and decrease of the spherical aberration can be detected based on the increase and decrease of jitter, and if the spherical aberration is compensated, the jitter also decreases.

The PRML process part 170 performs a partial response (PR) process and a maximum likelihood (ML) process for the RF signals. During the PR process, the PRML process part 170 compensates or amplifies the RF signals with distorted waveforms or too small waveforms by using a certain algorithm, in other words, equalizes the waveforms by every frequency. During the ML process, the PRML process part 170 multiplies the waveforms to detect Viterbi, and give rates to signals to perform boosting. As the PRML process part 170 proceeds with the RF signals, a simulated bit error rate (SBER) can be obtained and as the SBER value is smaller, less aberration is generated.

The drive 130 drives the CL lens and the actuator 80 of the optical pick-up to compensate for the aberration, and the servo part 140 controls the drive 130 according to the focusing signal and the tracking signal output from the PDIC 50 of the optical pick-up.

The DSP part 120 operates as a digital reading signal process part that restores the binary signals converted by the R/F part 110 to original data by using its own clock phase-synchronized for outputting the data.

The micom 100 controls the above members to read, writes data on the optical disk 70, and compensates for the aberration and the optical power prior to writing the data and during the writing of the data. The micom 100 may periodically or unperiodically compensate the aberration and the optical power.

To this end, a ROM 105 of the micom 100 holds the information on the optimum optical power corresponding to each disk code. Each disk code is an inherent code of the optical disk given according to capacity, type, model, and manufacturer of optical disk, and is included in the absolute time in pre-groove (ATIP) information encoded in the read-in area of the optical disk. The micom 100 reads the information on the disk code encoded in the optical disk and the optimum optical power for the disk code of the ROM 105 and adjusts the optical power of the laser light emitted from the laser diode 10 to have the optimum optical power. The optical power of the laser light can be adjusted by an amount of electric current supplied to the laser diode 10.

The optimal power calibration (OPC) process refers to a process in which the micom 100 determines the optimum optical power for a particular optical disk. If a job is selected by a user to write data onto the optical disk, the micom 100 detects the optical power prior to writing data onto the optical disk to determine if it is the optimum optical power corresponding to the disk code, and if not, the micom 100 performs the OPC process, which searches the optimum optical power.

As the data is written onto the optical disk 70, the continuous generation of laser light results in the increase of the temperature of elements and the optical disk 70, and accordingly, the optical power actually arriving on the optical disk 70 is changed. To compensate for the changed optical power, the micom 100 operates the optical power calculation part 150 periodically while the data is written onto the optical disk 70 to detect the optical power actually arriving on the optical disk 70. If the detected optical power is not included in the certain permitted range for the optimum optical power, the micom 100 adjusts the amount of electric current supplied to the laser diode to output the optimum optical power.

The micom 100 compensates for the aberration before and while the data is written or read on the optical disk 70. To compensate the aberration, the micom 100 uses the jitter, the RF signal, and the SBER obtained by operating the jitter calculation part 160, the R/F part 110, and the PRML process part 170, respectively, and the modulation degree and the track signal calculated for obtaining the γ value. The optical pick-up moves in a radius direction of the optical disk track before the data is written or read on the optical disk to detect the track signal, and as the track signal has better features, the aberration become less.

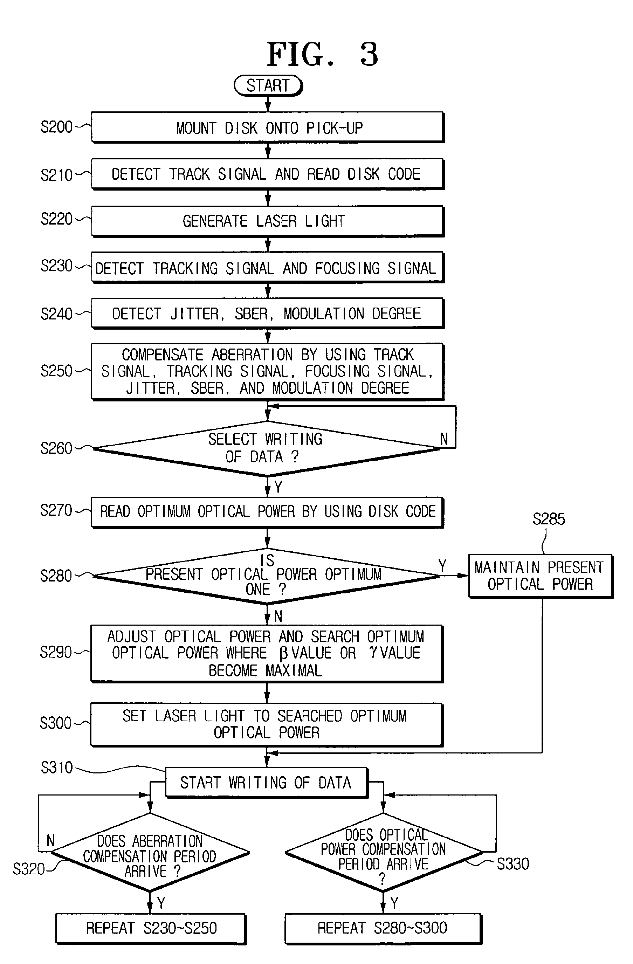

The processes of compensating for the aberration and performing the OPC operation of the optical disk writing and reading apparatus with the above structure will be in detail explained with reference to Figure 3.

As the optical disk is mounted onto the optical pick-up (S200), the micom 100 drives the optical pick-up in a radius direction of a track to detect the tracking signal, and reads in the information on the disk code encoded in the read-in area of the optical disk (S210). Then, the micom 100 operates the laser diode 10 to generate the laser light (S220). The PDIC 50 detects the tracking signal and the focusing signal from the laser light reflected to the optical disk 70 (S230), and the jitter calculation part 160, the PRML process part 170, and the optical power calculation part 150 detect the jitter, the SBER, and the modulation degree, respectively (S240).

The micom 100 approaches the CL to the OL or distances the CL from the OL in order to compensate the aberration by using at least one of the detected track signal, tracking signal, focusing signal, jitter, SBER, and modulation degree (S250). Or, the aberration may be compensated by arranging a liquid crystal element in front of the CL and changing a power supplied to the liquid crystal element as the CL is fixed.

If a user selects the writing of data while reading the optical disk or at the time of beginning of reading the optical disk (S260), the micom 100 performs the OPC process prior to writing data on the optical disk. The micom 100 compares the disk code read from the optical disk with the optimum optical power for the disk code of the ROM 105 to get the optimum optical power (S270). Then, the micom 100 operates the optical power calculation part 150 to calculate the β value or the γ value by using the RF signal, and determines if the present optical power is the optimum one according to the calculated β value or γ value (S280). If the present optical power is the optimum one, the present optical power is maintained (S285), and if the present optical power is not the optimum one and is not include in the certain permitted range, the micom 100 adjusts the amount of electric current supplied to the laser diode to search the time when the β value or the γ value is the maximum value, that is, the optimum optical power (S290), and sets the optical power of the laser light generated from the laser diode by using the searched optical power (S300).

Then, the data starts to be written on the optical disk with the set optimum optical power (S310). As the time for writing the data increases, the temperature also increases so that the divergent angle and the polarization direction of the laser light generated from the laser diode are changed and accordingly, the optical power is changed. Under a high temperature circumstance, the optical power itself weakens so that the optical power generated from the laser diode and the optical power actually arriving on the optical disk are different. Accordingly, the micom 100 determines if the next time for compensating the optical power, that is, the optical power compensation period, arrives while writing the data, and if so, the micom 100 operates the optical power calculation part 150 and repeats the steps from S280 to S300 so that the optical power can be set to the optical one (S330).

While writing the data on the optical disk, as the next time for compensating for the aberration, that is, the aberration compensation period, arrives, the micom 100 repeats the steps of S230 through S250 that compensate the aberration by using at least one of the track signal, the tracking signal, the focusing signal, the jitter, the SBER, and the modulation degree (S320).

The optical power compensation period is preferably set to be longer than the aberration compensation period. The aberration typically changed quickly according to the state of the optical disk, whereas the temperature is gradually changed by the laser light. Therefore, the optical power does not need to have a short compensation period like the aberration compensation.

The optical disk writing and reading apparatus detects the optical power actually arriving on the optical disk by using β value and γ value prior to and while writing the data, as the optical power is changed according to the temperature change and the state of the optical disk by every certain time. Then, the optimum optical power is searched as the β value or the γ value becomes maximal, and the present optical power is set to the optimum optical power. Accordingly, the data can be written on the optical disk with the optimum optical power so that the data can be accurately written and errors incapable of reading the written data can be prevented.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An optical writing and reading apparatus comprising:

   an optical pick-up (10, 50) for writing or reading data on an optical disk (70) by using a laser light of a certain wavelength; and
   an optical power calculation part (150) for calculating an optical power of the laser light generated from the optical pick-up (10, 50);

   **characterised by**:

   a micom (100) for operating the optical power calculation part (150) periodically to detect the optical power of the laser light and adjust the optical power of the laser light based on a preset optimum optical power to be optimized while writing the data on the optical disk.

2. The apparatus as claimed in claim 1, wherein the micom (100) reads a disk code encoded in the optical disk (70) to detect the optimum optical power for writing and adjusts the optical power of the laser light based on the optimum optical power.

3. The apparatus as claimed in claim 1 or 2, further comprising:

an R/F part (110) for converting an electrical signal into a binary signal to output an RF signal, the electrical signal converted from the laser light by having been reflected by the optical disk (70) at the optical pick-up (10,50); and wherein the optical power calculation part (150) detects a change of a reading signal such as a $\beta$ value indicating a symmetry of a waveform of the RF signal based on 0 point and a $\gamma$ value indicating a numerical value of a modulation degree according to a change of the optical power.

4. The apparatus as claimed in claim 3, wherein the micom (100) adjusts the optical power of the laser light to search the optimum optical power where the $\beta$ value and the $\gamma$ value become maximal, and sets the laser light to the optimum optical power.

5. The apparatus as claimed in any preceding claim, further comprising at least one of:

a jitter calculation part (160) for calculating a jitter by using the electrical signal, the electrical signal converted from the laser light by having been reflected by the optical disk; a PRML process part (170) for performing a partial response (PR) process and a maximum likelihood (ML) process for the RF signal to output a simulated bit error rate (SBER), and the micom (100) compensates for an aberration periodically by using at least one of the jitter, the SBER, a track signal obtained by moving the optical pick-up (10, 50) in a direction of a radius of a track, a tracking signal and a focusing signal obtained by the R/F part, while writing the data on the optical disk.

6. The apparatus as claimed in claim 5, wherein the micom (100) compensates for the aberration prior to optimizing the optical power if there exists one of a request on writing the data and a request on reading the data on the optical disk.

7. The apparatus as claimed in claim 6, wherein the micom (100) compensates the aberration while writing or reading the data on the optical disk.

8. The apparatus as claimed in claim 7, wherein the micom (100) compensates the aberration by approaching a collimating lens (CL) (30) toward an object lens (OL) (40) or distancing the CL (30) from the OL (40).

9. The apparatus as claimed in claim 7, wherein a liquid crystal element, to which a power is supplied, is arranged in front of the CL (30), and the micom (100) compensates for the aberration by changing the power supplied to the liquid crystal element.

10. A method for writing and reading data on an optical disk, comprising:

mounting an optical disk (70) onto an optical pick-up (10, 50) and selecting a data writing process; calculating an optical power of a laser light generated from the optical pick-up (10, 50);

**characterised by**:

if the calculated optical power is not included in a certain permitted range of a preset optimum optical power, adjusting the optical power to determine an optimum optical power; and setting an output of the laser light to the determined optimum optical power.

11. The method as claimed in claim 10, further comprising:

reading a disk code from a read-in area of the optical disk (70) to detect the optimum optical power for writing the data.

12. The method as claimed in claim 11, further comprising:

converting an electrical signal into a binary signal to output an RF signal, wherein the electrical signal is converted from the laser light by having been reflected by the optical disk (70) at the optical pick-up (10, 50); and the determining the optimum optical power step determines the optimum optical power by using at least one of a $\beta$ value indicating a symmetry of a waveform of the RF signal based on 0 point and a $\gamma$ value indicating a numerical value of a modulation degree according to a change of the optical power.

13. The method as claimed in claim 12, wherein the setting the laser light step adjusts the optical power of the laser light to determine the optimum optical power where the $\beta$ value and the $\gamma$ value become maximal and sets the laser light to the optimum optical power.

**14.** The method as claimed in claim 13, further comprising at least one of:

> calculating a jitter by using the electrical signal converted from the laser light by having been reflected by the optical disk;
> performing a partial response (PR) process and a maximum likelihood (ML) process for the RF signal to output a SBER;
> outputting a track signal obtained by moving the optical pick-up (10, 50) in a direction of a radius of a track; and
> calculating a tracking signal and a focusing signal from the RF signal,
> the method further comprising compensating the aberration by using at least one of the jitter, the SBER, the track signal, the tracking signal, and the focusing signal, obtained by the above steps while writing the data.

**15.** The method as claimed in claim 14, wherein the compensating the aberration step is performed prior to optimizing the optical power if there exists one of a request for writing data and a request for reading data on the optical disk.

**16.** The method as claimed in claim 15, wherein the compensating the aberration step is performed while writing or reading the data on the optical disk.

**17.** The method as claimed in claim 16, wherein the compensating the aberration step is performed by approaching the CL (30) to the OL (40) or distancing the CL (30) from the OL (40).

**18.** The method as claimed in claim 16, wherein a liquid crystal element, to which a power is supplied, is arranged in front of the CL (30), and the compensating the aberration step is performed by changing the power supplied to the liquid crystal element.

# FIG. 1

$P < P_{WO}$

(a)

$P = P_{WO}$

(b)

$P > P_{WO}$

(c)

# FIG. 2

# FIG. 3

START

S200 — MOUNT DISK ONTO PICK-UP

S210 — DETECT TRACK SIGNAL AND READ DISK CODE

S220 — GENERATE LASER LIGHT

S230 — DETECT TRACKING SIGNAL AND FOCUSING SIGNAL

S240 — DETECT JITTER, SBER, MODULATION DEGREE

S250 — COMPENSATE ABERRATION BY USING TRACK SIGNAL, TRACKING SIGNAL, FOCUSING SIGNAL, JITTER, SBER, AND MODULATION DEGREE

S260 — SELECT WRITING OF DATA ?　　N

Y

S270 — READ OPTIMUM OPTICAL POWER BY USING DISK CODE

S285

S280 — IS PRESENT OPTICAL POWER OPTIMUM ONE ?　　Y → MAINTAIN PRESENT OPTICAL POWER

N

S290 — ADJUST OPTICAL POWER AND SEARCH OPTIMUM OPTICAL POWER WHERE β VALUE OR γ VALUE BECOME MAXIMAL

S300 — SET LASER LIGHT TO SEARCHED OPTIMUM OPTICAL POWER

S310 — START WRITING OF DATA

S320 — DOES ABERRATION COMPENSATION PERIOD ARRIVE ?　　N

S330 — DOES OPTICAL POWER COMPENSATION PERIOD ARRIVE ?

Y

REPEAT S230~S250

Y

REPEAT S280~S300